# EUROPEAN PATENT APPLICATION

(11) **EP 4 386 506 A1**
(43) Date of publication of application: **19.06.2024**
(21) Application number: 23215196.9
(22) Date of filing: 08.12.2023
(51) Int. Cl.: G05D 1/00, G05D 101/20, G05D 1/243, G05D 1/633

(54) **METHOD OF NAVIGATING AN UNMANNED, SELF-PROPELLED VEHICLE, AND UNMANNED, SELF-PROPELLED VEHICLE CONFIGURED TO PERFORM THE METHOD**

(30) Priority: 15.12.2022 NL 2033730
(71) Applicant: Lely Patent N.V., 3147 PB Maassluis (NL)
(72) Inventor: DEN TOOM, Matthijs, 3147 PB Maassluis (NL); BUIJS, Martinus Cornelis Johannes, 3147 PB Maassluis (NL)
(74) Representative: Octrooibureau Van der Lely N.V.

(57) **Abstract**

In a method of navigating an unmanned, self-propelled vehicle in an area in which cows can move about freely, wherein the location of the vehicle in said area is determined using the steps of: gathering vehicle environment data by means of at least one sensor provided on the vehicle, selecting from these gathered data a first subset of vehicle environment data which has been gathered by means of the at least one sensor in a substantially horizontal direction at a level below standing cows' torsos, recognizing cow torsos in said vehicle environment data with the aid of data gathered by means of the at least one sensor, deducing positions of cow legs from the recognized cow torsos, relating the deduced cow leg positions to corresponding data in the first subset of vehicle environment data, filtering the data corresponding to the deduced cow leg positions out of the first subset of vehicle environment data, and comparing the resulting second subset of vehicle environment data to vehicle environment reference data, the accuracy of the vehicle localization is improved. An animal-friendly and safe method is realized. The invention also relates to an unmanned, self-propelled vehicle configured to perform the method.

## Description

The present invention relates to a method of navigating an unmanned, self-propelled vehicle in an area in which cows can move about freely.

Such methods are known in the art, for example from EP2169501 B1. Careful and precise navigation is of the utmost importance in such methods, particularly because live animals are involved.

There is a need for an improved and more accurate method.

It is an object of the present invention to provide such an improved method.

The invention achieves the object at least in part by means of a method according to claim 1, in particular a method of navigating an unmanned, self-propelled vehicle in an area in which cows can move about freely, wherein the location of the vehicle in said area is determined using the steps of: gathering vehicle environment data by means of at least one sensor provided on the vehicle, selecting from these gathered data a first subset of vehicle environment data which has been gathered by means of the at least one sensor in a substantially horizontal direction at a level below standing cows' torsos, recognizing cow torsos in said vehicle environment data with the aid of data gathered by means of the at least one sensor, deducing positions of cow legs from the recognized cow torsos, relating the deduced cow leg positions to corresponding data in the first subset of vehicle environment data, filtering the data corresponding to the deduced cow leg positions out of the first subset of vehicle environment data, and comparing the resulting second subset of vehicle environment data to vehicle environment reference data.

The invention is based on the insight that the accuracy of the localization of the vehicle can be improved when vehicle environment data at a level below standing cows' torsos are used and cow legs are filtered out of these data with the aid of cow torso recognition. The recognition of the cow torsos enables the determination of the position of the cow legs with a high degree of accuracy, so that these can be filtered out precisely. The remaining low level vehicle environment data are practically free from obstacles and therefore very well suited for a comparison with vehicle environment reference data. The accuracy of the vehicle localization is thus improved. In this way, an animal-friendly and safe method is realized.

The invention also relates to an unmanned, self-propelled vehicle configured to perform the method.

Suitable and advantageous embodiments are described in the dependent claims, as well as in the description below.

According to a first embodiment of the invention, vehicle environment data are gathered by means of a sensor provided on the vehicle which is suitable for generating a point cloud in a substantially horizontal direction. Using a generated point cloud as (part of) the vehicle environment data has proven to give excellent results.

According to a further embodiment, vehicle environment data are gathered by means of a sensor provided on the vehicle which is suitable for performing a laser scan in a substantially horizontal plane. Using a laser scan to obtain (part of) the vehicle environment data has proven to give satisfactory results and is a relatively cheap solution.

Advantageously, vehicle environment data are gathered by means of a sensor provided on the vehicle which is suitable for repeatedly generating images of the vehicle environment. Thus, it is possible to recognize cow torsos in the vehicle environment.

In a further embodiment, cow torsos are recognized by means of image analysis. This is a simple, but highly effective implementation.

In yet another embodiment, cow torsos are recognized by means of machine learning. In this way, the process can be automated to a high degree.

Advantageously, cow torsos are recognized and cow leg positions deduced in generated images of the vehicle environment. Thus, a precise determination of the cow leg positions is rendered possible in a simple way, which allows for an accurate filtering of the corresponding data out of the first subset of vehicle environment data.

According to a further embodiment, the positions of cow legs are deduced from the recognized cow torsos taking into account the orientation of each cow torso. This further improves the accuracy.

In an unmanned, self-propelled vehicle for performing an activity in a space in which at least one cow is present, comprising a frame with propelling means, control means with navigation means, and at least one sensor for gathering vehicle environment data which is operatively connected to the control means with navigation means, the control means with navigation means are configured to perform the method according to one of the previously described embodiments. Thus, a safe and efficient unmanned, self-propelled vehicle is provided.

The invention will now be further explained with reference to the following Figures, which schematically illustrate the method and the vehicle according to the invention.
Figure 1 shows a vehicle according to the invention;
Figure 2 illustrates an image of a cow in a stable taken from the vehicle;
Figure 3 is a schematical top view of an area in which the vehicle has moved and has generated a point cloud of the vehicle environment.

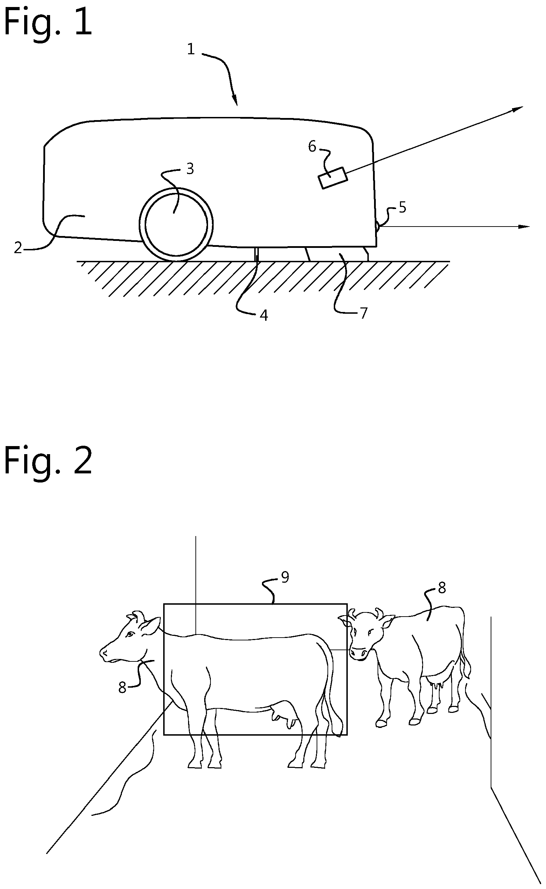

In Figure 1 an unmanned, self-propelled vehicle 1 for performing an activity in a space in which at least one cow is present is depicted. It comprises a frame 2 with propelling means (known as such and not shown, e.g. an electric motor), two wheels 3 (one provided on each lateral side of the vehicle 1) and a further supporting element 4 for the frame 2 (provided substantially centrally), control means with navigation means (known as such and not shown, e.g. a computer), and sensors 5, 6 for gathering vehicle environment data. The sensors 5, 6 are operatively connected to the control means with navigation means, which are operatively connected to the propulsion means, and thus to the wheels 3.

It is noted that the control means with navigation means can be provided on the vehicle 1, but they could also be provided separately and communicate with the vehicle 1, preferably via a wireless connection.

The vehicle 1 can be used in an animal husbandry system with an area in the form of a stable or shed or barn wherein a group of animals, such as cows, can move about freely. The stable can also be a structure with, for example, a partly open roof. The method according to the invention can be applied in a free stall barn or in an open area like a meadow or pasture with cattle fences.

In the example shown, the vehicle 1 is further provided with scraper means 7 for scraping manure off the floor and displacing it and thus cleaning the floor of the area in which the vehicle 1 is operative. In case the stable has a grid floor, the vehicle 1 can shove the manure through the grid. In other embodiments (not shown) the vehicle 1 can be e.g. a manure collector, a feed pusher or any other unmanned, self-propelled vehicle 1 for performing an activity in a space in which cows are present.

The first sensor 5 is provided at the lower front end of the vehicle 1 and is directed in a substantially horizontal and forward direction. In the embodiment shown, sensor 5 is a Lidar sensor. Lidar (acronym of light (or laser imaging) detection and ranging) is a well-known method for determining ranges (variable distance) by targeting an object with a laser and measuring the time for the reflected light to return to the receiver. Lidar can also be used to make digital 3-D representations of areas, due to differences in laser return times, and by varying laser wavelengths.

The Lidar sensor 5 generates a point cloud: a set of data points characterising the vehicle environment. It is directed substantially horizontally towards the walls or fences or other boundaries of the area in which the vehicle 1 is active. In this way, there are not many obstacles in the field of view of the sensor 5. Reference data relating to the area boundaries are stored in the control means with navigation means and can be compared to the gathered vehicle environment data in order to determine the position of the vehicle 1 in the area.

In principle, the point cloud is generated in 3D. In an alternative embodiment, vehicle environment data are gathered by means of a cheaper and simpler laser scan sensor which performs a 2D laser scan in a substantially horizontal plane at a level below standing cows' torsos. As there are not many obstacles present in the horizontal direction at this level, this technical solution is also feasible. Performing a 2D laser scan requires less computing power than generating a 3D point cloud.

The control means with navigation means are provided with software configured for selecting a first subset of vehicle environment data which have thus been gathered by means of the sensor 5 in a substantially horizontal direction at a level below standing cows' torsos. At this low level, the data are not hampered by the presence of many obstacles.

Of course, said level is readily known to the skilled person, in dependence on the cows' breed and age.

The principal obstacles in the field of view of the sensor 5 are cow legs. In accordance with the invention, the gathered vehicle environment data which are to be compared to the vehicle environment reference data are first treated by filtering out these obstacles.

In the embodiment shown, the second sensor 6 is a camera or other optical sensor provided on the vehicle 1 which is suitable for repeatedly generating images of the vehicle environment. The sensor 6 is directed in a slightly upward and forward direction, so that cows in the vicinity of the vehicle can be registered by the sensor 6.

Figure 2 shows an image taken by the camera 6 of cows 8 in the stable in front of the vehicle 1. A cow torso 9 is recognized in the image. To this end, the control means with navigation means are provided with image analysis means. This can be software (known as such), or use can be made of machine learning, e.g. using the well-known neural network object detection algorithm YOLO. In accordance with the invention, with the aid of images generated by sensor 6, cow torsos 9 are recognized by means of image analysis or by means of machine learning. Thus, the vehicle can recognize a cow torso 9 in an image.

The control means with navigation means are provided with software which is configured to deduce the positions of cow legs from recognized cow torsos 9 in generated images of the vehicle environment. Preferably, the positions of cow legs are deduced from the recognized cow torsos 9 taking into account the orientation of each cow torso. The software is further configured to relate the deduced cow leg positions to corresponding cow leg data in the first subset of vehicle environment data gathered by sensor 5, for filtering the data corresponding to the deduced cow leg positions out of the first subset of vehicle environment data, and for comparing the resulting second subset of vehicle environment data to vehicle environment reference data. In this way, the remaining obstacles in the already practically obstacle-free first subset of vehicle environment data are filtered out, so that the comparison of the remaining second subset of vehicle environment data to the stored vehicle environment reference data results in a very accurate localization of the vehicle 1 in the area.

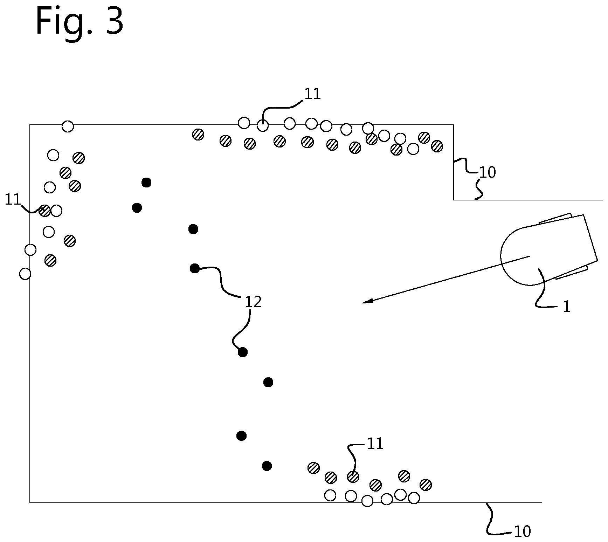

Figure 3 is a schematical top view of an area in which the vehicle 1 has moved and has generated a 3D point cloud of the vehicle environment, schematically shown as little circles. Near the walls 10 there are point cloud elements 11 generated with the aid of sensor 5, depicted as white or hatched circles. Furthermore, there are point cloud elements 12, which are also generated with the aid of sensor 5. By means of the software in the control means with navigation means and the images generated by the sensor 6 these elements 12 have been identified as corresponding to cow legs.

Of course, Figure 3 is only a schematic illustration, because the resolution of the point cloud is much higher than shown. As explained before, the elements 11, 12 may also be obtained by means of a cheaper laser scan in a plane.

The positions of the cow legs have been deduced from the cow bodies 9 recognized in images, possibly in combination with data from the first subset of vehicle environment data (the low data), to ensure a reliable cow leg position determination. As explained above, the software relates the cow leg position data to the corresponding data in the first subset. Then, these data are filtered out of the first subset. The black circles 12 in Figure 3 are thus eliminated from the first subset. The resulting second subset consists of the white and hatched circles 11. These data are optimally suited for comparison with the vehicle environment reference data representing the walls 10, in order to obtain a reliable position determination for the vehicle 1 in the area.

It is noted that, in principle, it is also possible to recognize cow torsos 9 directly in the "low" point cloud data or laser scan data as generated by sensor 5. In that case, the deduced cow leg data can be filtered out directly from the first subset of vehicle environment data, and the method step of relating the deduced cow leg positions to corresponding data in the first subset of vehicle environment data becomes trivial or superfluous.

In another embodiment, use is made of only one sensor, which is suitable both for performing a scan below the cow torsos and for generating an image used for recognizing a cow torso 9. This can be done e.g. with a stereo camera.

### REFERENCE NUMERAL LIST

- 1: vehicle
- 2: frame
- 3: wheel
- 4: supporting element
- 5: sensor
- 6: sensor
- 7: scraper means
- 8: cow
- 9: recognized cow torso
- 10: wall
- 11: point cloud element
- 12: point cloud element corresponding to cow leg

## Claims

1. Method of navigating an unmanned, self-propelled vehicle (1) in an area in which cows (8) can move about freely, wherein the location of the vehicle (1) in said area is determined using the steps of: gathering vehicle environment data (9, 11, 12) by means of at least one sensor (5, 6) provided on the vehicle (1), selecting from these gathered data a first subset of vehicle environment data (11, 12) which has been gathered by means of the at least one sensor (5, 6) in a substantially horizontal direction at a level below standing cows' torsos, recognizing cow torsos in said vehicle environment data (9, 11, 12) with the aid of data gathered by means of the at least one sensor (5, 6), deducing positions of cow legs from the recognized cow torsos, relating the deduced cow leg positions to corresponding data (12) in the first subset of vehicle environment data (11, 12), filtering the data (12) corresponding to the deduced cow leg positions out of the first subset of vehicle environment data (11, 12), and comparing the resulting second subset of vehicle environment data (11) to vehicle environment reference data.

2. Method according to claim 1, wherein vehicle environment data (11, 12) are gathered by means of a sensor (5) provided on the vehicle (1) which is suitable for generating a point cloud (11, 12) in a substantially horizontal direction.

3. Method according to any one of claims 1 - 2, wherein vehicle environment data (11, 12) are gathered by means of a sensor (5) provided on the vehicle (1) which is suitable for performing a laser scan in a substantially horizontal plane.

4. Method according to any one of claims 1 - 3, wherein vehicle environment data (9) are gathered by means of a sensor (6) provided on the vehicle (1) which is suitable for repeatedly generating images of the vehicle environment.

5. Method according to any one of claims 1 - 4, wherein cow torsos (9) are recognized by means of image analysis.

6. Method according to any one of claims 1 - 5, wherein cow torsos (9) are recognized by means of machine learning.

7. Method according to any one of claims 4 - 6, wherein cow torsos (9) are recognized and cow leg positions deduced in generated images of the vehicle environment.

8. Method according to any one of claims 1 - 7, wherein the positions of cow legs are deduced from the recognized cow torsos (9) taking into account the orientation of each cow torso.

9. Unmanned, self-propelled vehicle (1) for performing an activity in a space in which at least one cow (8) is present, comprising a frame (2) with propelling means, control means with navigation means, and at least one sensor (5, 6) for gathering vehicle environment data (9, 11, 12) which is operatively connected to the control means with navigation means, wherein the control means with navigation means are configured to perform the method according to one of claims 1 - 8.
